# EUROPÄISCHE PATENTSCHRIFT

(11) **EP 2 847 936 B1**
(45) Veröffentlichungstag und Bekanntmachung des Hinweises auf die Patenterteilung: **21.08.2019**
(21) Anmeldenummer: 13721350.0
(22) Anmeldetag: 08.05.2013
(51) Int. Cl.: H04L 12/26, H04L 12/911, H04L 12/913

(54) **VERFAHREN ZUR ÜBERTRAGUNG VON DATEN IN EINEM PAKETORIENTIERTEN KOMMUNIKATIONSNETZWERK UND ENTSPRECHEND EINGERICHTETES TEILNEHMERGERÄT AN DEM KOMMUNIKATIONSNETZWERK**
METHOD FOR TRANSMITTING DATA IN A PACKET-ORIENTED COMMUNICATIONS NETWORK AND CORRESPONDINGLY CONFIGURED USER TERMINAL IN SAID COMMUNICATIONS NETWORK
PROCÉDÉ DE TRANSMISSION DE DONNÉES DANS UN RÉSEAU DE COMMUNICATION ORIENTÉ PAQUETS, ET APPAREIL D'ABONNÉ ADAPTÉ AUDIT PROCÉDÉ, PRÉSENT DANS LEDIT RÉSEAU DE COMMUNICATION

(30) Priorität: 11.05.2012 DE 102012207929
(43) Veröffentlichungstag der Anmeldung: 18.03.2015
(73) Patentinhaber: Continental Automotive GmbH, 30165 Hannover (DE)
(72) Erfinder: NÖBAUER, Josef, 92445 Neukirchen-Balbini (DE); ZINNER, Helge, 98646 Straufhain (DE)
(86) Internationale Anmeldenummer: PCT/EP2013/059646
(87) Internationale Veröffentlichungsnummer: WO 2013/167690

(56) Entgegenhaltungen:
- EP-A1- 1 211 851
- EP-A1- 1 548 980
- EP-A1- 2 247 037
- WO-A1-2009/023838
- US-B1- 8 064 356
- POLK S DHESIKAN CISCO SYSTEMS J: "A Resource Reservation Protocol (RSVP) Extension for the Reduction of Bandwidth of a Reservation Flow; rfc4495.txt", 20060501, 1. Mai 2006 (2006-05-01), XP015046323, ISSN: 0000-0003
- SHIMONISHI H ET AL: "Performance analysis of fast reservation protocol with generalized bandwidth reservation method", PROCEEDINGS OF IEEE INFOCOM 1996. CONFERENCE ON COMPUTER COMMUNICATIONS. FIFTEENTH ANNUAL JOINT CONFERENCE OF THE IEEE COMPUTER AND COMMUNICATIONS SOCIETIES. NETWORKING THE NEXT GENERATION. SAN FRANCISCO, MAR. 24 - 28, 1996; [PROCEEDINGS OF INFOCOM],, Bd. 2, 24. März 1996 (1996-03-24), Seiten 758-767, XP010158139, DOI: 10.1109/INFCOM.1996.493373 ISBN: 978-0-8186-7293-4
- "IEEE P1722â /D2.5 Draft Standard for Layer 2 Transport Protocol for Time Sensitive Applications in a Bridged Local Area Network ; 1722-d2-5", IEEE DRAFT; 1722-D2-5, IEEE-SA, PISCATAWAY, NJ USA, Bd. 1722, 30. September 2010 (2010-09-30), Seiten 1-65, XP017636904, [gefunden am 2010-09-30] in der Anmeldung erwähnt
- "IEEE Standard for Local and Metropolitan Area Networks---Virtual Bridged Local Area Networks Amendment 14: Stream Reservation Protocol (SRP);IEEE Std 802.1Qat-2010 (Revision of IEEE Std 802.1Q-2005)", IEEE STANDARD, IEEE, PISCATAWAY, NJ, USA, 30. September 2010 (2010-09-30), Seiten 1-119, XP017604406, ISBN: 978-0-7381-6501-1

## Beschreibung

Die Erfindung betrifft ein Verfahren zur Ermittlung einer tatsächlichen Latenz in einem paketorientierten Kommunikationsnetzwerk mit einer garantierten maximalen Übertragungszeit der Datenpakete und ein entsprechend eingerichtetes Teilnehmergerät an dem Kommunikationsnetzwerk. Bei dem Kommunikationsnetzwerk (auch kurz als Netzwerk bezeichnet) handelt es sich insbesondere um das Kommunikationsnetzwerk eines Kraftfahrzeugs, beispielsweise nach dem Ethernet-AVB-Standard.

Das erfindungsgemäße Verfahren nutzt das aus dem IEEE Standard 802.1Qat-2010: "Virtual Bridged Local Area Networks - Amendment 14: Stream Reservation Protocol (SRP)" bekannte Protokoll, bei dem vor einer Datenübertragung mittels einer Reservierungsanfrage von dem Sender der Daten zu einem oder mehreren Empfängern der Daten eine gewisse Dienstgüte als Kapazität der Kommunikationsverbindung reserviert wird. Mit einer Bestätigung der Reservierungsanfrage wird dem Datenstrom die angeforderte Dienstgüte als Kapazität der Kommunikationsverbindung zwischen Sender und Empfänger in dem Netzwerk garantiert. Alternativ wird mit einer Ablehnung auf die Reservierungsanfrage mitgeteilt, dass eine Datenübertragung nicht möglich ist. Die Ablehnung kann insbesondere einen Fehlercode enthalten, wie beispielsweise eine Angabe "unzureichende Datenrate". Üblicherweise und entsprechend dem Standard ist hierbei jedoch keine Statusmitteilung über das Netzwerk und insbesondere die noch zur Verfügung stehende Datenrate in dem Netzwerk enthalten.

Üblicherweise werden die Daten in einem Datenstrom ausgehend von dem Sender über weitere Teilnehmergeräte des Netzwerks, sogenannte Switches, zu dem oder den Empfänger(n) weitergeleitet. Dies gilt auch für die Reservierungsanfrage, wobei der Sender eine von dem Empfänger ausgehende Bestätigung enthält, wenn die Reservierungsanfrage mit positiver Beurteilung durch die den Datenstrom weiterleitenden Switches bei dem Empfänger eintrifft und der Empfänger zum Empfangen und Verarbeiten des angefragten Datenstroms in der Lage und bereit ist. Dann sendet der Empfänger aktiv eine Bestätigung aus, die über die Switches zu dem Sender zurückgeleitet werden.

Die Ablehnung auf eine Reservierungsanfrage kann von dem oder den nominalen Empfänger(n) des Datenstroms ausgehen, wenn dieser oder diese die Daten nicht verarbeiten können oder wollen. Andererseits kann eine Ablehnung auf die Reservierungsanfrage auch durch einen der zwischengeschalteten, zur Weiterleitung der Datenpakete vorgesehenen Switches erfolgen, wenn dieser die angefragte Dienstgüte, insbesondere die angefragte Datenrate und Latenz, aktuell nicht zur Verfügung stellen kann. Die Reservierungsanfrage kann als Parameter der angeforderten Dienstgüte daher insbesondere die Datenrate des Datenstroms und/oder dessen Latenz, d. h. die maximale Übertragungszeit von dem Sender zu dem Empfänger, beispielsweise in Form einer angeforderten Datenart, neben ggf. noch weiteren Parametern umfassen. Insbesondere die zur Verfügung stehende Datenrate und/oder Latenz werden im Rahmen der nachfolgenden Erfindung verkürzt auch als Kapazität bezeichnet.

Für den Einsatz im Kraftfahrzeug wird mit zunehmendem Interesse der neue Ethernet-AVB-Standard (IEEE 802.1 BA) untersucht, der im Gegensatz zu einem herkömmlichen (üblichen) Standard-Ethernet eine maximale Übertragungszeit von Datenpaketen (Latenz) garantieren kann. Ethernet-AVB-Daten werden als Datenpakete beispielsweise gemäß dem IEEE 1722 oder dem IEEE 1733-Transportprotokoll übertragen.

Bevor die eigentliche Datenübertragung jedoch begonnen werden kann, wird mittels einer Reservierungsanfrage von dem Sender zu einem oder mehreren Empfängern, die über Switches in dem Kommunikationsnetzwerk weitergeleitet wird, sofern keine direkte Verbindung zwischen Sender und Empfänger besteht, eine gewisse Dienstgüte (insbesondere Latenz und Datenrate, auch verallgemeinert nachfolgend auch als Kapazität bezeichnet) reserviert. Dazu werden Reservierungsanfragen gemäß einem MSRP-Protokoll (Multiple Stream Reservation Protocol) von dem auch Talker genannten Sender zu dem oder den Listener(n) genannten Empfänger(n) übertragen, wobei maximal sechs Switches zwischen Sender und Empfänger zwischengeschaltet sein dürfen, um die Latenz der jeweils angefragten Klasse einzuhalten. Die Netzwerkverbindung zwischen zwei Teilnehmergeräten wird als Hop bezeichnet.

Die Reservierungsanfragen enthalten neben der Größe des Datenstroms üblicherweise auch deren Sendefrequenz und eine sogenannte AVB-Klasse, wobei nach dem vorgenannten Standard zwei Klassen A und B vorgesehen sind. In der Klasse A wird eine maximale Übertragungszeit (Latenz) von dem Sender zu dem Empfänger von 2 ms garantiert; in der Klasse B sind dies 50 ms.

Wenn der Empfänger Daten erwartet oder einfordert, kann dieser eine Anfrage, dass er einen Datenstrom empfangen möchte, an den Sender aussenden. Diese Anfrage wird, wie die gesamte Kommunikation zwischen Empfänger und Sender, durch die Switches bis zum Sender weitergeleitet.

Daraufhin schickt der Sender die vorerwähnte Reservierungsanfrage, welche auch als Streamingangebot aufgefasst werden kann und Parameter wie die AVB-Klasse (auch QoS-Klasse genannt, Quality of Service), die Datenrate, den Rang im Sinne einer Wichtigkeit oder Priorität der Mitteilung und/oder die Sendefrequenz enthält. Der Switch prüft bei der Weiterleitung der Reservierungsanfrage, ob er diese Ressourcen in dem Kommunikationsnetzwerk noch zur Verfügung stellen kann und leitet bei positiver Prüfung die Nachricht an den Empfänger bzw. in Richtung des Empfängers an den nächsten Switch weiter. Dieser antwortet auf das Angebot und schickt eine Bestätigung zurück. Alle Switches auf dem Weg von dem Sender zu dem Empfänger registrieren den zu übertragenden Datenstrom und reservieren die notwendige Dienstgüte (QoS) über Einstellungen in ihren internen Queues und Registern. Bekommt der Sender eine positive Rückmeldung, kann der Datenstrom übertragen werden, dem dann die angeforderte Dienstgüte (QoS) zusteht. Diese sichert u. a. eine definierte maximale Verzögerung des Datenstroms während der Übertragung zwischen dem Sender und dem Empfänger zu.

Falls eine Reservierung nicht positiv bestätigt werden kann, erhält der die Reservierungsanfrage aussende Sender eine Ablehnung auf die Reservierungsanfrage mitgeteilt, die üblicherweise auch einen Fehlercode enthält. Die Fehlercodes geben zwar Aufschluss über den Grund der Ablehnung, die in einem häufigen Regelfall wohl eine nicht ausreichende Kapazität, insbesondere eine nicht ausreichende Datenrate, ist. Allerdings enthalten sie keine Auskunft über den Status des Netzwerks, d. h. beispielsweise die noch zur Verfügung stehende Datenrate.

Es besteht somit keine Möglichkeit, die Reservierungsanfrage gezielt an das Netzwerk anzupassen, um eine positive Bestätigung der Reservierungsanfrage zu erhalten und die Daten in dem Kommunikationsnetzwerk zügig übertragen zu können.

Die WO 01/82022 A2 offenbart eine Analyse einer Netzwerk-Performance, bei der mehrere Datenpakte eines Datenstroms zwischen Netzwerkteilnehmern versendet werden und eine Ankunftscharakteristik der Datenpakete aufgezeichnet wird. Durch Vergleich der Ankunftscharakteristik der verschiedenen Datenpakete wird die Variabilität der Datenübertragung im Netzwerk bestimmt. Dabei können Verluste von Paketen oder Änderungen der Übertragungszeit untersucht werden, wobei die WO 01/82022 A2 von nicht synchronisierten Netzwerkteilnehmern ausgeht. Datenratengarantien können mit diesem Verfahren allerdings nicht überprüft werden.

Aus der EP 2 247 037 A1 ist ein Kommunikationssystem mit einer garantierten Datenrate bekannt, bei dem von einem Endpunktgerät eine Datenraten-Reservierungsanfrage über zwischengeschaltete, der Reservierungsanfrage an den Empfänger weiterleitende Switches ausgesandt wird. Die Switches leiten die Reservierungsanfrage jeweils in Richtung des Endgerätes weiter, wenn sie die Datenratenanforderung erfüllen können. Vom Endgerät wird die Reservierungsanfrage dann zurückgesandt. Dies zeigt an, dass die Datenratenreservierung abgeschlossen ist und die Datenübertragung beginnen kann. Andernfalls wird die Datenraten-Reservierungsanfrage durch den Switch zurückgeschickt, der die Anfrage nicht bedienen kann. Dies zeigt an, dass eine Kommunikation mit der angeforderten Datenrate nicht erlaubt ist. Dann ist es alternativ möglich, die Kommunikation mit einer reservierbaren Datenrate zu erlauben oder bestmöglich auszuführen. Dazu wird die durch den Switch reservierbare Datenrate als Wert zurückgegeben. Bei einem Wert 0 wird keine Datenrate reserviert und garantiert, die Kommunikation aber gleichwohl gestattet. Die Kommunikation wird bestmöglich ausgeführt. Für das hier vorgeschlagene Verfahren ist es allerdings notwendig, dass die Switches selbst über eine erhebliche Logik verfügen, die sie teuer und daher für Anwendungen im Automobilbereich uninteressant macht. Eine solche Lösung ist auch mit dem Ethernet-AVB-Standard nicht kompatibel.

EP 1 211 851 A1 offenbart ein Verfahren, mittels modifizierter bzw. erweiterter PATH- und RESV-Nachrichten des RSVP Protokolls Informationen über einen derzeitigen Status und verfügbare Dienstgüte eines Netzwerks zu sammeln, wobei die Informationen mit oder ohne zeitlichen Bezug zu einer bereitzustellenden Kommunikationsverbindung gesammelt werden.

In "A Resource Reservation Protocol (RSVP) Extension for the Reduction of Bandwidth of a Reservation Flow", The Internet Society, Network Working Group, rfc4495, May 2006, ISSN:0000-0003, stellen J. Polk und S. Dhesikan eine Erweiterung des RSVP Protokolls vor, die die Bandbreite einer bestehenden Verbindung reduziert, wenn eine höher priorisierte Reservierungsanfrage für dasselbe Netzwerksegment vorliegt, und die Bandbreite des Netzwerksegments nicht ausreicht, gleichzeitig beide Verbindungen mit der jeweils benötigten Bandbreite bereitzustellen.

In "Performance Analysis of Fast Reservation Protocol with Generalized Bandwidth Reservation Method" stellen H. Shimonishi, T. Takine, M. Murata und H. Miyahara ein Netzwerkprotokoll vor, das auf mehrfache Ablehnung von Reservierungsanfragen mit höherer Bandbreite die Bandbreite in nachfolgenden Reservierungsanfragen solange reduziert, bis eine Reservierungsanfrage angenommen wurde.

EP 1 548 980 A1 offenbart ein Verfahren zur Messung der Leistungsfähigkeit eines Netzwerks, bei dem eindeutig identifizierten Datenpaketen beim Senden und beim Empfangen Zeitstempel zugewiesen werden. Die Zeitstempel werden in einer Datenbank gespeichert und für eine Analyse der Leistung des Netzwerks aus der Datenbank ausgelesen.

Aufgabe der Erfindung ist es daher, die tatsächliche Latenz in einem paketorientierten Kommunikationsnetzwerk zu ermitteln, insbesondere im Rahmen des Ethernet-AVB-Standards.

Diese Aufgabe wird erfindungsgemäß mit den Merkmalen des Anspruchs 1 gelöst.

Entsprechend der vorbeschriebenen Beschreibung bezieht sich die Erfindung auch auf ein Teilnehmergerät gemäß Anspruch 2.

Entsprechend bezieht sich die Erfindung auch auf ein geeignetes Computerprogrammprodukt gemäß Anspruch 3.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschrieben und/oder bildlich dargestellten Merkmale für sich oder in beliebiger Kombination den Gegen-stand der vorliegenden Erfindung, auch unabhängig von ihrer Zusammenfassung in den Ansprüchen oder deren Rückbezügen.

Es zeigen:
- Fig. 1: den Ablauf einer Kommunikation mit Reservierungsanfrage in einem erfindungsgemäßen Kommunikationsnetzwerk nach einer besonders bevorzugten Ausführungsform;
- Fig. 2: eine Übersicht mit möglichen Fehlermeldungen bei einer Ablehnung der Reservierungsanfrage;
- Fig. 3: den Ablauf einer Reservierungsanfrage bei nicht ausreichender Kapazität in dem Kommunikationsnetzwerk;
- Fig. 4: schematisch ein Ablaufdiagramm eines Ausführungsbeispiels zur erfindungsgemäßen Ermittlung der Kapazität des Kommunikationsnetzwerks und
- Fig. 5: schematisch ein Ablaufdiagramm eines Ausführungsbeispiels für die Verifikation der Kapazität in dem Kommunikationsnetzwerk.

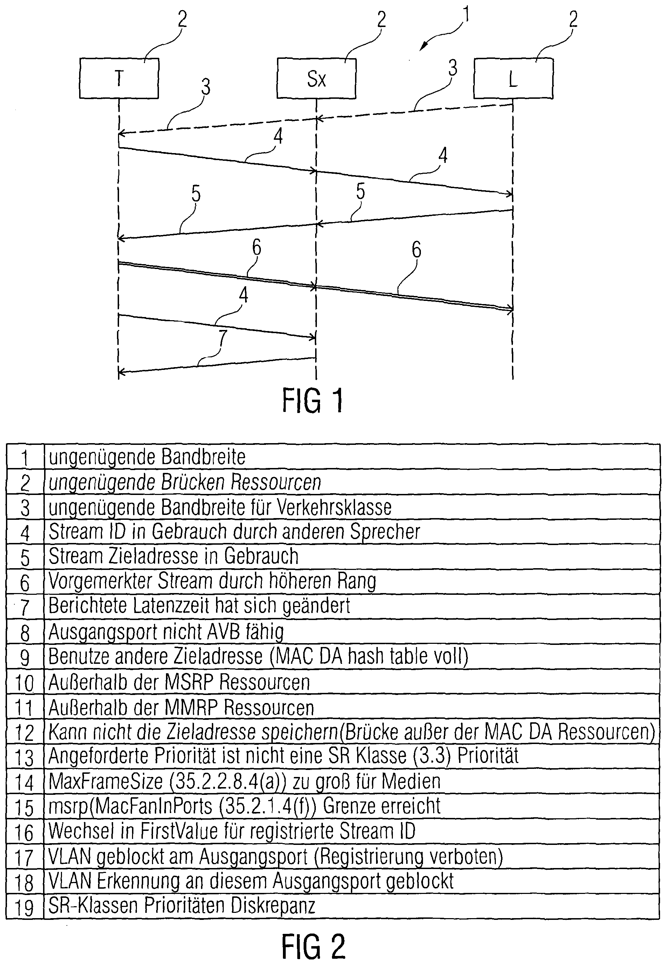

Fig. 1 zeigt ein erfindungsgemäßes, paketorientiertes Kommunikationsnetzwerk, welches nach dem Ethernet-AVB-Standard arbeitet, in einer schematischen Darstellung. In dem Netzwerk 1 befinden sich verschiedene, auch als Knoten bezeichnete Netzwerkteilnehmer 2, die miteinander kommunizieren. Bei der Kommunikation werden Datenpakete nach vorgegebenen Transportprotokollen, insbesondere nach dem Standard IEEE 1722 oder IEEE 1733 ausgetauscht. Der Ablauf der Kommunikation wird nachfolgend anhang von Fig. 1 erläutert, die unter dem jeweiligen Teilnehmergeräten 2 den zeitlichen Ablauf der Kommunikation darstellt, wobei die Zeit nach unten fortschreitend dargestellt ist.

In einem ersten, optionalen Schritt kann ein auch als Listener bezeichneter Empfänger L als Netzwerkteilnehmer 2 einen Datenstrom von einem auch als Teller bezeichneten Sender T als Netzwerkteilnehmer 2 anfordern. Hierzu kann eine Datenstromanfrage 3 durch den Empfänger L ausgesendet werden, die über einen oder mehrere Switches Sx an dem Empfänger T weitergeleitet wird.

Wenn der Sender T eine derartige Datenstromanfrage erhält, sendet der Sender T eine Reservierungsanfrage 4 aus, mit der eine gewisse Dienstgüte für den geplanten Datenstrom in dem Kommunikationsnetzwerk 1 reserviert werden soll. Hierbei enthält die Reservierungsanfrage insbesondere die geforderte Latenz (garantierte maximale Übertragungszeit) der Datenpakte des Datenstroms. Diese Reservierungsanfrage wird über die Switches Sx an den Empfänger L weitergeleitet, wobei jeder Switch Sx überprüft, ob die in der Reservierungsanfrage 4 angefragte Kapazität des Kommunikationsnetzwerks 1 tatsächlich zur Verfügung steht. In Fig. 1 ist der Übersichtlichkeit halber nur ein Switch Sx dargestellt.

Wenn dies der Fall ist, leitet der Switch Sx die Reservierungsanfrage 4 weiter, bis sie bei dem Empfänger L ankommt. Dieser entscheidet, ob er den angebotenen Datenstrom annehmen will und schickt nach einer positiven Prüfung eine Bestätigung 5 der Reservierungsanfrage 4 über die Switches Sx an den Sender T zurück, wobei die Switches Sx bei dem Weiterleiten der Bestätigung 5 für den angefragten Datenstrom die entsprechende Kapazität in dem Kommunikationsnetzwerk 1 reservieren. Nach Erhalt der Bestätigung 5 initiiert der Sender T einen Datenstrom 6, der aus der Aussendung einer Vielzahl von einzelnen Datenpaketen besteht, die über die Switches Sx zu dem Empfänger L weitergeleitet werden.

Falls dagegen beispielsweise ein Switch Sx die in der Reservierungsanfrage 4 angefragte Kapazität des Kommunikationsnetzwerks 1 nicht zur Verfügung stellen kann, sendet er auf eine Reservierungsanfrage 4 eine Ablehnung 7 der Reservierungsanfrage 4 aus. Dies ist in einem zweiten Kommunikationszyklus unterhalb des vorbeschriebenen Kommunikationszyklus in Fig. 1 dargestellt.

Die Ablehnung 7 der Reservierungsanfrage enthält einen Fehlercode, der zwar Aufschluss über den Grund für die Ablehnung gibt, jedoch die Kapazität des Netzwerks nicht mitteilt. Eine Übersicht möglicher Fehlercodes ist in Fig. 2 dargestellt, wobei der Fehlercode 1 "insufficient bankwidth", d. h. eine nicht ausreichende Datenrate, wohl ein sehr häufiger Fehlercode ist, der auf eine nicht ausreichende Kapazität des Kommunikationsnetzwerks 1 hinweist.

Da dieser Fehlercode jedoch keine Angabe über die noch zur Verfügung stehende Kapazität des Netzwerks enthält, kann eine darauffolgende Reservierungsanfrage 4 nicht an die tatsächliche (aktuelle) Kapazität des Kommunikationsnetzwerks 1 angepasst werden, um eine positive Bestätigung auf die Reservierungsanfrage 4 zu erhalten und die Datenübertragung beginnen zu können.

Im Rahmen des Standards ist es zwar möglich, durch Setzen eines Emergency Flags doch noch eine Bestätigung 5 der Reservierungsanfrage zu bekommen, da in diesem Fall niedriger priorisierte Reservierungen verdrängt werden können. Dies führt jedoch dazu, dass andere Datenströme ggf. ungewollt unterbrochen werden, da mit der Emergency Flag gekennzeichnete Datenströme unbedingt eine höhere Priorität aufweisen und bestehende Reservierungen löschen können. Dies kann den ganzen Kommunikationsprozess stören.

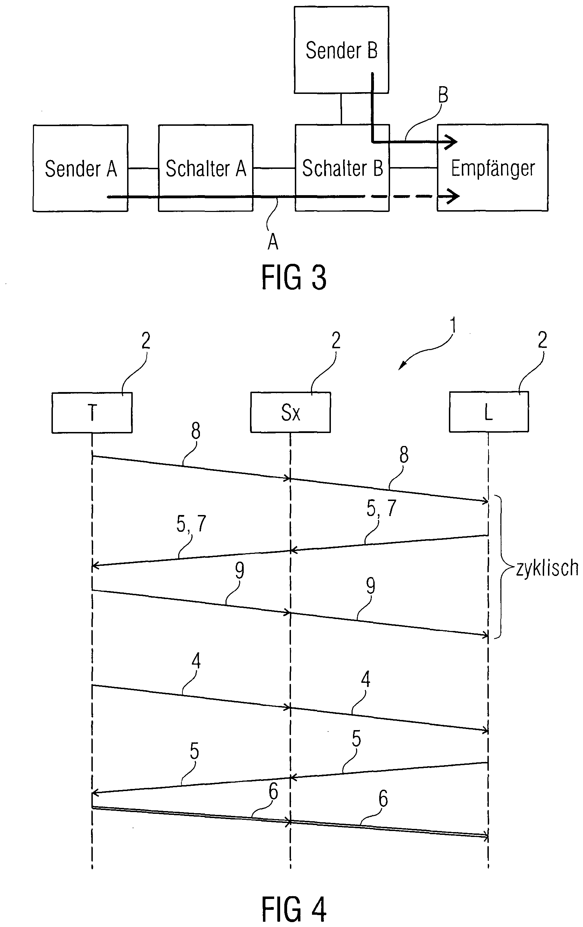

In Fig. 3 ist ein Reservierungsablauf mit einem Kapazitätsengpass dargestellt, der in der Praxis zu einer Ablehnung einer Reservierungsanfrage 4 führt. Gemäß der Spezifikation des Ethernet-AVB-Standards dürfen nur 75 % der verfügbaren Datenrate durch Reservierungsanfragen 4 reserviert werden. Dies entspricht bei einem üblichen 100 Mbit/s Netzwerks also 75 Mbit/s. In dem dargestellten Beispiel sind zwei Datenströme A und B vorgesehen. Der Datenstrom B, der ausgehend von dem Sender B über den Switch B zu dem Empfänger transportiert werden soll, ist fest mit einer Datenrate von 60 Mbit/s reserviert.

Zeitlich später schickt der Sender A über die Switches A und B eine Reservierungsanfrage 4 an den Empfänger. In der Reservierungsanfrage möchte der Sender A einen Datenstrom mit der Datenrate von 16 Mbit/s reservieren. Im Rahmen des vorgesehenen Standards gemäß dem Ethernet-AVB hat der Sender A keine Information über den bereits reservierten Datenstrom B, da das Ethernet-AVB keine Möglichkeit bietet, die aktuelle Kapazität des Kommunikationsnetzwerks zu bestimmen und in dem Netzwerk zu verteilen. Also sendet der Sender A einen Reservierungsanfrage 4 für den Datenstrom A in Richtung des Empfängers aus. Switch A, der auch keine Kenntnis über den reservierten Datenstrom B hat, beantwortet die Reservierungsanfrage 4 positiv und leitet sie in Richtung des Empfängers 4 an Switch B weiter. Dieser hat bereits eine Reservierung des Datenstroms B und erkennt, dass ein weiterer Datenstrom von 16 Mbit/s (zusätzlich zu dem bereits reservierten Datenstrom von 60 Mbit/s) die erlaubte Kapazitätsgrenze von 75 % überschreiten würde. Daher kann Switch B die Reservierungsanfrage 4 nicht positiv beantworten und sendet eine Ablehnung 7 der Reservierungsanfrage 4 an den Sender A zurück. Hierdurch verzögert sich die Aussendung des Datenstroms A erheblich, da nun abgewartet werden muss, bis in dem Kommunikationsnetzwerk 1 die erforderliche Güte für eine Reservierung des Datenstroms A zur Verfügung steht.

Hier setzt die Erfindung an, die vorschlägt, die aktuelle Kapazität des Kommunikationsnetzwerks 1 zu ermitteln. Dazu wird, wie in Fig. 4 dargestellt, von dem Sender T regelmäßig eine Reservierungsanfrage 8 zur Ermittlung der Kapazität des Kommunikationsnetzwerks ausgesandt, auch wenn der Sender T im aktuellen Zeitpunkt gar keine zur Übertragung anstehenden Daten hat. Alternativ kann eine solche Reservierungsanfrage 8 zur Kapazitätsermittlung auch ausgesandt werden, wenn der Sender T eine Ablehnung 7 einer Reservierungsanfrage 4 für einen realen Datenstrom erhalten hat.

Da das Kommunikationsnetzwerk 1 diese Reservierungsanfrage 8 zur Kapazitätsermittlung nicht von einer normalen Reservierungsanfrage 4 für einen Datenstrom unterscheiden kann, erhält der Sender T auf die Reservierungsanfrage 8 entsprechend eine Bestätigung 5 oder Ablehnung 7. Da hinter diesen Reservierungsanfragen 8 zur Kapazitätsermittlung keine wirklich zu übertragenden Daten stehen, simulieren diese Reservierungsanfragen 8 zur Kapazitätsermittlung also normale Reservierungsanfragen 4 (Echtanfragen), so dass die Bestätigung 5 oder Ablehnung 7 dem Sender T dann Aufschluss über die verbleibende Kapazität des Netzwerks 1 gibt.

Unter der Annahme, dass eine Anfrage beispielsweise mit einer Datenrate von 40 Mbit/s abgelehnt wird, weiß der Sender T, dass diese Kapazität im Netzwerk 1 zur Zeit nicht zur Verfügung steht. Daraufhin kann der Sender T eine darauffolgende Reservierungsanfrage 8 zur Kapazitätsermittlung mit 35 Mbit/s verschicken. So kann fortgefahren werden, bis der Sender T eine Bestätigung 5 auf seine Reservierungsanfrage 8 erhält. Dann weiß er, dass in dem Kommunikationsnetzwerk 1 aktuell die zuletzt angefragte Datenrate zur Verfügung steht. Dabei kann auch die aktuell noch zur Verfügung stehende Datenrate ermittelt werden.

Der Prozess aus Reservierungsanfragen 8 und Bestätigung 5 bzw. Ablehnung 7 hierauf wird also zyklisch, vorzugsweise mit variierenden Parametern durchgeführt, so lange, bis dem Sender T die aktuell vorhandene Kapazität des Netzwerks bekannt ist.

Um das Netzwerk nicht Übergebühr zu belasten ist vorgesehen, dass nach einer Bestätigung 5 auf eine Reservierungsanfrage 8 zur Kapazitätsermittlung eine Rücknahme 9 der Reservierungsanfrage 8 geschickt wird, um das Kommunikationsnetzwerk 1 nicht durch Dummy-Reservierungen zu blockieren. Nachfolgend berücksichtigt der Sender T dann die aktuell ermittelte Kapazität des Kommunikationsnetzwerks bei der Reservierungsanfrage 4 eines realen Datenstroms 6, wobei er einen Kapazitätswert anfragt, der mit dem aktuell ermittelten Status des Kommunikationsnetzwerks kompatibel ist, d. h. innerhalb der aktuell zur Verfügung gestellten Ressourcen liegt. In diesem Fall ist sehr wahrscheinlich, dass der Sender T eine Bestätigung 5 auf seine Reservierungsanfrage 4 für einen realen Datenstrom 6 erhält, so dass der reale Datenstrom 6 dann ausgesendet werden kann.

Um zu vermeiden, dass die Reservierungsanfragen 8 zur Kapazitätsermittlung tatsächlich reale Reservierungsanfragen 4 anderer Datenströme behindern, die ggf. nicht bestätigt werden können, kann durch einen Parameter in der Reservierungsanfrage 8 zur Kapazitätsermittlung sichergestellt werden, dass parallele echte Reservierungsanfragen 4 für Datenströme 6 Priorität vor den Reservierungsanfragen 8 zur Kapazitätsermittlung haben.

Als Ergebnis der Kapazitätsermittlung erhält der Sender T als möglicher Sender T für den realen Datenstrom also die noch zur Verfügung stehende Kapazität der angeforderten Kommunikationsverbindung (Netzwerkpfad, Route). Unter der Annahme, dass das Netzwerk 1 mehrere Routen zum Ziel liefert, kann mit Hilfe der Ergebnisse auch ein alternativer Weg für die Datenübertragung mit der ursprünglich gewünschten Kapazität in einem Ethernet-AVB-Netzwerk gewählt werden, wenn die Dienstgüte für die Datenübertragung nicht beschränkt werden soll. Die erfindungsgemäß vorgeschlagene Kapazitätsprüfung kann daher auch besonders vorteilhaft im Zusammenhang mit einer Routenwahl (Wegewahl) der Kommunikation verwendet werden und stellt daher einen sogenannten Layer-2-Routing-Mechanismus dar.

Nach einer positiven Bestätigung 5 auf eine Reservierungsanfrage 4, 8 besteht eine (theoretische) Garantie über die angeforderte Dienstgüte (QoS). In der Praxis des bestehenden Ethernet-AVB-Standards besteht jedoch keine Möglichkeit, dies wirklich zu verifizieren. Falls ein von der Garantie abweichendes Fehlverhalten eines Knotens bzw. Netzwerkteilnehmers 2, insbesondere eines Switches Sx, auftritt, kann dies negative Auswirkungen auf die Reservierung oder den Kommunikationsablauf haben.

Ein Beispiel für schwankende Netzwerkeigenschaften stellen drahtlose Netzwerke dar. Diese bieten aufgrund wechselnder Entfernung zwischen den Netzwerkteilnehmern, temporären Störeinflüssen und/oder einer schwankenden Anzahl an Teilnehmern verschiedene Dienstgüten, insbesondere verschiedene Datenraten und Latenzen, an. Bestehende Reservierungen können nicht mehr garantiert werden, wenn die Netzwerkqualität sinkt. Dies kann zu einem vollständigen Verlust der reservierten Verbindung führen. Die Abhängigkeit zwischen Empfangsqualität und damit zur Verfügung stehender Dienstgüte und der erforderlichen Dienstgüte wird bei heutiger Umsetzung noch nicht beachtet. Schlimmstenfalls kann die Übertragung in einem solchen Fall sogar abbrechen.

Daher ist es wünschenswert, auch die tatsächlich zur Verfügung stehende Kapazität des Kommunikationsnetzwerks zu überprüfen. Eine einfache Möglichkeit, vorangegangene Reservierungen zu überprüfen, ist das Simulieren eines Datenpaket-Streams. Jedes nach dem Standard IEEE 1722 (Transportprotokoll) versendete Datenpaket gehört entweder der Klasse A (802.1P mit der Priorität 3) oder der Klasse B (802.1P mit der Priorität 2) an.

Um ein Ethernet-AVB-Kommunikationsnetz 1 zyklisch zu überprüfen, einschließlich der Dienstgüte (QoS) der Switches Sx für die Prioritäten 2 und 3, kann die Auslastung durch Dummy-Datenströme verifiziert werden, die eine möglichst geringe Netzbelastung auslösen. Bei diesen Datenströmen handelt es sich also um solche Datenströme, die von einem Sender T zu einem Empfänger L gesendet werden und nur der Diagnose dienen. Inhalt der übertragenen Daten ist dabei die aktuelle Uhrzeit zzgl. eines Zeitintervalls, wobei die Zeit vorzugsweise in Millisekunden angegeben wird. Diese Zeit als Zeiteintrag des Datenpakets kann mit der aktuellen Verarbeitungszeit im Empfänger L überprüft werden, wobei ein Fehler zurückgemeldet wird, wenn die Verarbeitungszeit zeitlich nach der in dem Datenpaket enthaltenen Zeit (d. h. nach der Zeit des Zeiteintrags) liegt. Durch Variation des Zeitintervalls X in verschiedenen Datenpaketen des Datenstroms kann der Grenzwert ermittelt werden, der die noch zur Verfügung stehende Güte gewährleisten kann.

Beispielsweise könnte man das Zeitintervall auf 1 ms setzen. Wenn die Übertragungszeit länger als 1 ms ist, erkennt der Empfänger dies durch Vergleich der aktuellen Uhrzeit und kann daraus schließen, dass das Zeitintervall von 1 ms nicht gewährleistet werden kann. Bei entsprechender Änderung des Zeitintervalls in den Datenpaketen kann so die aktuelle Latenz des Netzwerks bestimmt werden und die Garantie der jeweiligen AVB-Klassen A oder B genauer eingestellt werden. Dadurch kann die vorgegebene Latenz bei der Übertragung optimiert werden.

Im Rahmen der Erfindung wird also vorgeschlagen, mit Hilfe des Transportprotokolls IEEE 1722 entsprechende Datenströme (Frames bzw. Datenpakete) mit einem Zeitstempel zu versehen, wann die Daten zu verarbeiten sind. Dieser Zeitstempel wird auch als Presentation Time bezeichnet und leitet sich aus der aktuellen, im AVB-Netzwerk bzw. der AVB-Wolke synchronen Uhrzeit plus der maximalen Verzögerung der Güteklasse ab. Die maximale Verzögerung entspricht der garantierten maximalen Übertragungszeit. Bei Klasse A, der höherwertigen AVB-Streamingklasse, werden dabei jedem Frame zwei Millisekunden zusätzlich addiert. Bei Klasse B sind es entsprechend 50 Millisekunden, innerhalb derer der AVB-Standard garantiert, dass ein Datenpaket den Empfänger erreicht hat, sofern dieser in der AVB-Wolke (weniger als 8 Hops entfernt) liegt.

Aufgrund der Synchronisation innerhalb des AVB-Netzwerks ist es ohnehin zwingend notwendig, dass der Sender T und der Empfänger L die gleiche Uhrzeit als Referenzuhrzeit haben, wobei der Uhrenunterschied kleiner als 1 µs sein soll.

Kommen also Datenpakete bei dem Empfänger L an, wird die Gültigkeit der Presentation Time geprüft. Liegt die Presentation Time aus dem aktuell empfangenen Datenpaket in der Vergangenheit, wurde das Paket auf seinem Weg zu stark verzögert und damit die Güte des Datenstroms verletzt. Dies kann Ausgangspunkt einer Fehlerbehandlung sein. Beispielsweise können die Güteparameter der Übertragung entsprechend angepasst werden.

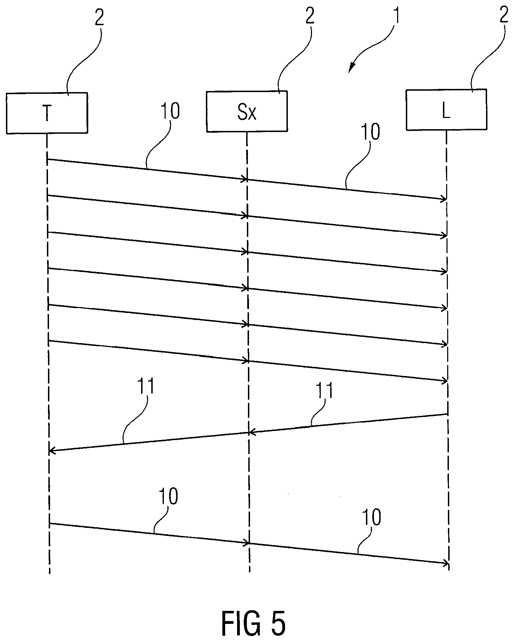

Dieses Vorgehen ist in Fig. 5 dargestellt, in der die als Datenstrom zur Ermittlung der tatsächlichen Kapazität Datenpakete 10 gesendet werden, deren Inhalt aus einem aktuellen Zeitstempel zzgl. einer vorgegebenen Verarbeitungszeit ist, die variabel eingestellt werden kann. Solange der Empfänger L die Datenpakete 10 früher erhält als es der Zeitstempel (Zeiteintrag) der Datenpakete 10 vorgibt, reagiert dieser nicht. In diesem Fall kann die durch das zusätzliche Zeitintervall, welches zur aktuellen Uhrzeit hinzuaddiert wurde, als Latenz garantiert werden. Erst wenn die Verarbeitungszeit in dem Empfänger L zeitlich später liegt als der Zeitstempel des Datenpakets 10 des Datenstroms zur Ermittlung der tatsächlichen Kapazität des Netzwerks 1, wird eine Fehlermeldung 11 zurückgegeben. Hierdurch lässt sich die tatsächliche Latenz bzw. Kapazität des Kommunikationsnetzwerks 1 zuverlässig bestimmen.

Auch dieser Vorgang kann insofern zyklisch erfolgen, als die Überprüfung der tatsächlichen Kapazität des Kommunikationsnetzwerks 1 durch Aussendung der Datenpakete 10 in regelmäßigen Abständen wiederholt wird.

Im aktuellen Ethernet-AVB-Standard gibt es kein Transportprotokoll, welches die Möglichkeit bietet, die aktuelle Kapazität des Netzwerks zu bestimmen und zu verteilen. Bei Ablehnung einer Reservierungsanfrage 4 bleibt einzig die Möglichkeit, eine neue Anfrage 4 mit einem speziellen Emergency Flag zu versenden, das andere Datenströme unterbrechen kann. Dies führt zu einer ineffizienten Ausnutzung der zur Verfügung stehenden Ressourcen.

Durch das erfindungsgemäß beschriebene Verfahren können die Netzwerkressourcen besser ausgenutzt werden, weil die freien Kapazitäten des Kommunikationsnetzwerks 1 bestimmt werden. Vorteilhaft ist, dass für die Umsetzung des neuen Verfahrens kein neues Transportprotokoll notwendig ist und dieses kompatibel zu dem bisherigen Standard ist.

Auf die Ablehnung 7 einer Reservierungsanfrage 8 zur Kapazitätsermittlung kann der Sender nun flexibel reagieren und die Reservierungsanfragen 4 derart anpassen, dass die Übertragung der Daten möglichst zeitnah erfolgen kann. Außerdem besteht die Möglichkeit, die zugesicherten Ressourcen zu validieren. Dies eröffnet die Möglichkeit, die Netzwerkqualität zu überprüfen und ein entsprechendes Fehlerhandling beispielsweise durch Änderung der Dienstgüteklassen (AVB-Klassen) zu erreichen. Aus der gemessen Latenzzeit kann ferner ein Rückschluss auf die aktuellen Netzwerkkapazitäten im Hinblick auf die Übertragungsdauer verwendet werden. Dies ist insbesondere im Rahmen mobiler Netzwerke und Netzwerken mit schwankender zur Verfügung stehender Datenrate besonders vorteilhaft.

Durch die Ergebnisse der Validierung können auch rückwirkend für bereits bestehende Datenströme die Dienstgüteparameter angepasst werden. Merkt man durch eine laufende Diagnose der Verzögerung, dass sich der Verhalten des Netzwerks negativ verändert, kann man so frühzeitig reagieren und bestehende oder neue Datenströme in eine höhere Dienstgüteklasse verschieben, um möglichen Fehlern vorzubeugen, bevor diese bei den Anwendungen zu Fehlern führen.

## Patentansprüche

1. Verfahren zur Ermittlung einer tatsächlichen Latenz in einem paketorientierten Kommunikationsnetzwerk (1) mit einer garantierten maximalen Übertragungszeit der Datenpakete (9), wobei vor einer Datenübertragung (6) mittels einer Reservierungsanfrage (4) von einem Sender (2, T) zu dem Empfänger (2, L) eine gewisse Dienstgüte der Kommunikationsverbindung reserviert wird und mit einer Bestätigung (5) der Reservierungsanfrage (4) dem Datenstrom die angeforderte Dienstgüte der Kommunikationsverbindung zwischen Sender (2, T) und Empfänger (2, L) in dem Netzwerk (1) garantiert wird oder mit einer Ablehnung (7) mitgeteilt wird, dass eine Übertragung nicht möglich ist, **dadurch gekennzeichnet, dass** zur Ermittlung der tatsächlichen Latenz ein Datenstrom von dem Sender (2, T) zu dem Empfänger (2, L) gesendet wird, dessen Inhalt Datenpakete (10) mit einem Zeiteintrag sind, der aus der Summe der aktuellen Zeit beim Versenden des Datenpakets (10) zuzüglich eines vorgebbaren Zeitintervalls besteht, dass in dem Empfänger (2, L) die Verarbeitungszeit mit dem Zeiteintrag verglichen wird, wobei der Empfänger (2, L) eine Fehlermeldung (11) zurücksendet, wenn die Verarbeitungszeit zeitlich nach dem Zeiteintrag liegt, und dass das vorgebbare Zeitintervall für unterschiedliche Datenpakete variiert wird.

2. Teilnehmergerät an einem Kommunikationsnetzwerk (1) *umfassend* einer Sende-Empfangseinrichtung und einer Recheneinheit, wobei die Recheneinheit zur Durchführung einer Kommunikation auf dem Kommunikationsnetzwerk (1) nach einem Kommunikationsprotokoll eingerichtet ist, **dadurch gekennzeichnet, *dass*** *die Recheneinheit so konfiguriert ist, dass sie das Verfahren nach Anspruch 1 ausführt.*

3. Computerprogrammprodukt umfassend Programmcodemitteln, *die bei der Ausführung auf einer Recheneinheit diese veranlassen das Verfahrens nach Anspruch 1 auszuführen.*

## Claims

1. Method for determining an actual latency in a packet-oriented communication network (1) having a guaranteed maximum transmission time for the data packets (9), wherein a specific quality of service of the communication link is reserved prior to a data transmission (6) by means of a reservation request (4) from a sender (2, T) to the receiver (2, L) and the requested quality of service of the communication link between sender (2, T) and receiver (2, L) is guaranteed in the network (1) for the datastream by confirmation (5) of the reservation request (4) or an indication is given by means of a rejection (7) that transmission is not possible, **characterized in that** for determining the actual latency, a datastream is sent from the sender (2, T) to the receiver (2, L), the content of which are data packets (10) having a time entry which consists of the sum of the current time on sending the data packet (10) plus a predeterminable time interval, **in that** in the receiver (2, L), the processing time is compared with the time entry, the receiver (2, L) sending back an error message (11) if the processing time is after the time entry in time, and **in that** the predefinable time interval is varied for different data packets.

2. User terminal in a communication network (1) comprising a transmitting/receiving device and a computing unit, the computing unit being configured for performing a communication in the communication network (1) in accordance with a communication protocol, **characterized in that** the computing unit is configured such that it executes the method according to Claim 1.

3. Computer program product comprising program code means which, when executed on a computing unit, cause said computing unit to execute the method according to Claim 1.

## Revendications

1. Procédé de détermination d'une latence réelle dans un réseau de communication orienté paquets (1) présentant un temps de transmission maximal garanti des paquets de données (9), dans lequel une certaine qualité de service est réservée au moyen d'une requête de réservation (4) envoyée d'un émetteur (2, T) au récepteur (2, L) avant une transmission de données (6) et la qualité de service requise de la liaison de communication entre l'émetteur (2, T) et le récepteur (2, L) dans le réseau (1) est garantie à l'aide d'une confirmation (5) de la requête de réservation (4) du flux de données, ou bien il est indiqué à l'aide d'une notification de rejet (7) qu'une transmission est impossible,
**caractérisé en ce que**, pour déterminer la latence réelle, un flux de données est transmis de l'émetteur (2, T) au récepteur (2, L), dont le contenu est constitué de paquets de données (10) comportant une entrée de temps qui consiste en la somme du temps actuel lors duquel le paquet de données (10) est transmis et d'un intervalle de temps pouvant être prédéterminé, **en ce que** le temps de traitement est comparé à l'entrée de temps dans le récepteur (2, L), le récepteur (2, L) renvoyant un message d'erreur (11) lorsque le temps de traitement est postérieur à l'entrée de temps, et **en ce que** l'intervalle de temps pouvant être prédéterminé est modifié pour différents paquets de données.

2. Dispositif d'abonné sur un réseau de communication (1) comprenant un émetteur-récepteur et une unité de calcul, dans lequel l'unité de calcul est conçue pour effectuer une communication sur le réseau de communication (1) conformément à un protocole de communication,
**caractérisé en ce que** l'unité de calcul est configurée pour mettre en oeuvre le procédé selon la revendication 1.

3. Produit de programme informatique comprenant des moyens à code de programme qui, lors de leur exécution sur une unité de calcul, amènent celle-ci à mettre en oeuvre le procédé selon la revendication 1.
